# EUROPEAN PATENT APPLICATION

(11) **EP 4 280 649 A1**
(43) Date of publication of application: **22.11.2023**
(21) Application number: 21919401.6
(22) Date of filing: 15.01.2021
(51) Int. Cl.: H04W 16/26, H04W 72/04

(54) **WIRELESS COMMUNICATION NODE AND WIRELESS COMMUNICATION METHOD**

(71) Applicant: NTT DOCOMO, INC., Tokyo 100-6150 (JP)
(72) Inventor: KURITA Daisuke, Tokyo 100-6150 (JP); HARADA Hiroki, Tokyo 100-6150 (JP); SUN Weiqi, Beijing 100190 (CN); WANG Jing, Beijing 100190 (CN); CHEN Lan, Beijing 100190 (CN)
(74) Representative: Hoffmann Eitle
(86) International application number: PCT/JP2021/001370
(87) International publication number: WO 2022/153508

(57) **Abstract**

A radio communication node comprising: a reception unit that receives downlink control information that specifies available frequency resources in a frequency direction as a radio resource to be allocated to a radio link with a lower node; and a control unit that dynamically controls communication using the radio link based on the downlink control information.

## Description

### [Technical Field]

The present disclosure relates to a radio communication node and a radio communication method that establish radio access and radio backhaul.

### [Background Art]

The 3rd Generation Partnership Project (3GPP) has specified the 5th generation mobile communication system (Also known as 5G, New Radio (NR) or Next Generation (NG)) and is also in the process of specifying the next generation called Beyond 5G, 5G Evolution or 6G.

For example, NR's Radio Access Network (RAN) specifies Integrated Access and Backhaul (IAB), which integrates radio access to terminals (User Equipment, UE) and radio backhaul between radio communication nodes such as radio base stations (gNBs) (see Non-Patent Literature 1).

In IAB, an IAB node has a Mobile Termination (MT), which is a function for connecting to a parent node (which may be called an IAB donor), and a Distributed Unit (DU), which is a function for connecting to a child node or UE.

Also, in IAB, simultaneous transmission and reception using time division recovery (TDD) or the like is supported for the radio link (Link_parent) between the parent node and the IAB node and the radio link (Link_child) between the IAB node and the child node.

### [Citation List]

### [Non-Patent Literature]

Non-Patent Literature 1: 3GPP TS 38.213 V 16.3.0, 3rd Generation Partnership Project; Technical Specification Group Radio Access Network; NR; Physical layer procedures for control (Release 16), 3GPP, September 2020

### [Summary of Invention]

By the way, in the IAB, not only TDD but also Frequency Division Reception (FDD) is being considered in relation to Link_parent (i.e., DU) and Link_child (i.e., MT), and the allocation of semi-static resources in TDD and FDD is also being considered. Furthermore, for TDD, the dynamic allocation of time resources in the time direction available as DU resources are also being considered using Downlink Control Information (DCI).

Against this background, the inventors, after careful consideration, found the need for the dynamic allocation of not only time resources available in the time direction but also frequency resources available in the frequency direction.

Therefore, the following disclosure has been made in view of this situation, and the purpose is to provide radio communication nodes and radio communication methods that can dynamically use frequency resources in the frequency direction that can be used as DU resources.

An aspect of the present disclosure is a radio communication node comprising: a reception unit that receives downlink control information that specifies available frequency resources in a frequency direction as a radio resource to be allocated to a radio link with a lower node; and a control unit that dynamically controls communication using the radio link based on the downlink control information.

An aspect of the present disclosure is a radio communication method comprising: a step of receiving downlink control information that specifies available frequency resources in a frequency direction as a radio resource to be allocated to a radio link with a lower node; and a step of dynamically controlling communication using the radio link based on the downlink control information.

### [Brief Description of Drawings]

[Fig.1]: Fig.1 is an overall schematic diagram of radio communication system 10.
[Fig.2]: Fig.2 shows an example of the basic configuration of the IAB.
[Fig.3]: Fig.3 shows the functional block configuration of the radio communication node 100B (IAB node).
[Fig.4]: Fig.4 illustrates the semi-static DU resource.
[Fig.5]: Fig.5 illustrates the semi-static DU resource.
[Fig.6]: Fig.6 illustrates the first example of the dynamic DU resource.
[Fig.7]: Fig.7 illustrates the first example of the dynamic DU resource.
[Fig.8]: Fig.8 illustrates the first example of the dynamic DU resource.
[Fig.9]: Fig.9 illustrates the first example of a dynamic DU resource.
[Fig.10]: Fig.10 illustrates the first example of a dynamic DU resource.
[Fig.11]: Fig.11 illustrates the second example of a dynamic DU resource.
[Fig.12]: Fig.12 illustrates the second example of a dynamic DU resource.
[Fig.13]: Fig.13 illustrates the second example of a dynamic DU resource.
[Fig.14]: Fig.14 illustrates the third example of a dynamic DU resource.
[Fig.15]: Fig.15 illustrates the third example of a dynamic DU resource.
[Fig.16]: Fig.16 illustrates the third example of a dynamic DU resource.
[Fig.17]: Fig.17 illustrates the RRC message for the fourth example of a dynamic DU resource.
[Fig.18]: Fig.18 illustrates the RRC message for the fourth example of a dynamic DU resource.
[Fig.19]: Fig.19 shows an example of the hardware configuration of radio communication nodes 100A to 100C.

### [Modes for Carrying out the Invention]

Exemplary embodiments of the present invention are explained below with reference to the accompanying drawings. Identical functions and configurations are denoted by the same or similar symbols, and their descriptions are omitted as appropriate.

### (1) Overall schematic configuration of the radio communication system

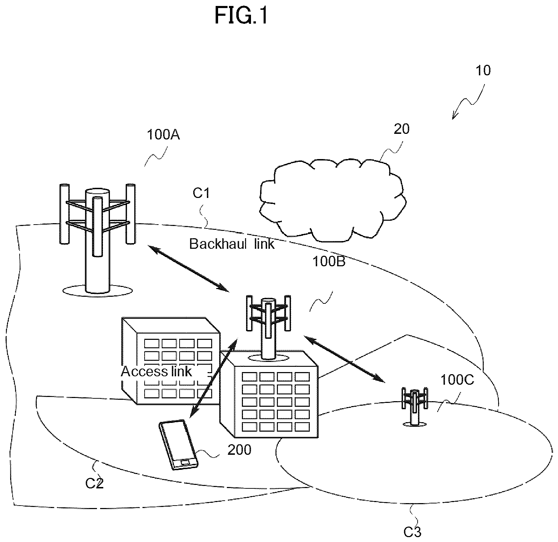

Fig.1 is an overall schematic configuration diagram of a radio communication system 10 according to the present embodiment. The radio communication system 10 is a radio communication system according to 5G New Radio (NR) and is composed of multiple radio communication nodes and terminals. The radio communication system 10 may be a radio communication system according to a scheme called Beyond 5G, 5G Evolution or 6G.

Specifically, the radio communication system 10 includes the Next Generation-Radio Access Network 20 (hereinafter, UE 200, User Equipment), NG-RAN, radio communication nodes 100A, 100B, 100C, and terminal 200 (hereinafter referred to as NG-RAN 20).

Radio communication nodes 100A, 100B, and 100C can form cell C1, cell C2, and cell C3, respectively. Through the cell, radio communication nodes 100A, 100B, and 100C can set radio access (Access link) with the UE 200 and radio backhaul link between the radio communication nodes. Specifically, backhaul (transmission path) by radio link may be set between the radio communication node 100A and the radio communication node 100B and between the radio communication node 100B and the radio communication node 100C.

The configuration in which radio access with the UE 200 and radio backhaul between the radio communication nodes are integrated is called Integrated Access and Backhaul (IAB).

The IAB reuses existing functions and interfaces defined for radio access. In particular, Mobile-Termination (MT), gNB-DU (Distributed Unit), gNB-CU (Central Unit), User Plane Function (UPF), Access and Mobility Management Function (AMF) and Session Management Function (SMF) and corresponding interfaces such as NR Uu (between MT and gNB/DU), F1, NG, X2 and N4 may be used as baselines.

The radio communication node 100A is connected to NG-RAN 20 and core network (Next Generation Core (NGC) or 5GC) via a wired transmission path such as fiber transport. Note that NG-RAN and NGC may be included and simply expressed as "network."

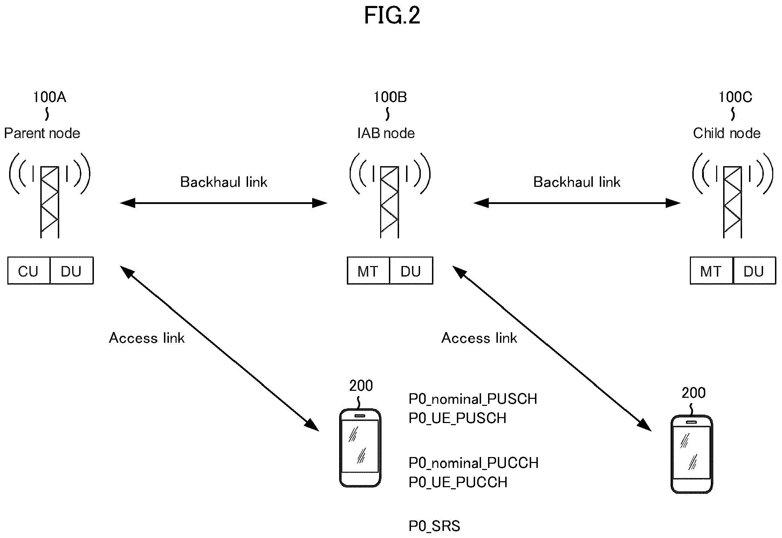

Fig.2 shows an example of the basic configuration of the IAB. As shown in Fig.2, in this embodiment, the radio communication node 100A constitutes an IAB donor in the IAB, and the radio communication node 100B (and the radio communication node 100C) may constitute an IAB node in the IAB.

The IAB donor may be referred to as a higher node in relation to the IAB node. In addition, the IAB donor may be referred to as a parent node. Also, the IAB donor has a CU, and the parent node is simply used as a name in relation to the IAB node (or child node) and may not have a CU. The IAB node may be called a subordinate node in relation to the IAB donor (parent node). The child node may also include a UE 200.

A backhaul link is established between the IAB donor and the IAB node. Specifically, a radio link called Link_parent may be established. A radio link (Backhaul link) is established between the IAB node and the child node. Specifically, a radio link called Link_child may be established.

Link parent may consist of a downward-facing DL Parent BH and an upward-facing UL Parent BH. Link_child may consist of a downward-facing DL Child BH and an upward-facing UL Child BH.

An IAB node has a Mobile Termination (IAB-MT), which is a function for connecting with an IAB donor, and a Distributed Unit (IAB-DU), which is a function for connecting with a child node (or UE 200). The child node also has an MT and a DU. The IAB donor has a Central Unit (CU) and a DU.

The radio resources utilized by a DU include, from the DU perspective, downlink (DL), uplink (UL) and flexible time-resource (D/U/F), which are classified as either Hard, Soft or Not Available (H/S/NA) types. Also, within Soft (S), available or not available is specified.

Flexible time-resource (F) is a radio resource (time resource and/or frequency resource) that can be used for either DL or UL. Also, "Hard" is a radio resource whose corresponding time resource is always available for use as a DU Link child connected to a child node or UE, and "Soft" is a radio resource (DU resource) whose availability of the corresponding time resource as a DU Link child is explicitly or implicitly controlled by the IAB donor (or parent node).

In addition, if it is Soft (S), the radio resource to be notified can be determined based on IA or INA.

"IA" means that the DU resource is explicitly or implicitly indicated as available. "INA" also means that the DU resource is explicitly or implicitly indicated as unavailable.

In the embodiment, the radio access and radio backhaul can be either half-duplex or full-duplex. In addition, time division multiplexing (TDM), space division multiplexing (SDM) and frequency division multiplexing (FDM) are available as multiplexing schemes.

When the IAB node operates in half-duplex communication, DL Parent BH is on the receiving (RX) side, UL Parent BH is on the sending (TX) side, DL Child BH is on the sending (TX) side, and UL Child BH is on the receiving (RX) side. In the case of time division duplex (TDD), the setting pattern of DL/UL in the IAB node is not limited to DL-F-UL only, but radio backhaul (BH) only, UL-F-DL or other setting patterns may be applied. In this embodiment, simultaneous operation of DU and MT in the IAB node is realized using SDM/FDM.

### (2) Function block configuration of radio communication system

Next, the functional block configuration of the radio communication system 10 is described. Specifically, the functional block configuration of the radio communication nodes 100A, 100B, and 100C constituting the IAB node is described.

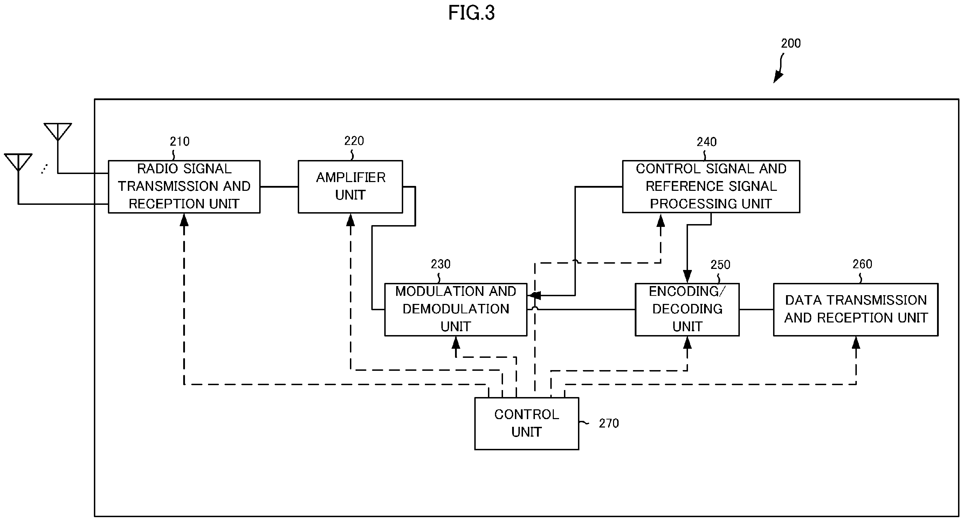

Fig.3 is a functional block configuration diagram of the radio communication node 100B (IAB node). Note that the radio communication node 100A is different from the radio communication node 100B that functions as an IAB node in that it functions as an IAB donor (parent node). In addition, the radio communication node 100C is different from the radio communication node 100B in that it functions as a child node. Hereafter, the case of the radio communication node 100B will be described as an example.

As shown in Fig.3, the radio communication node 100B includes a radio signal transmission and reception unit 110, an amplifier unit 120, a modulation and demodulation unit 130, a control signal processing unit 140, an encoding/decoding unit 150 and a control unit 170.

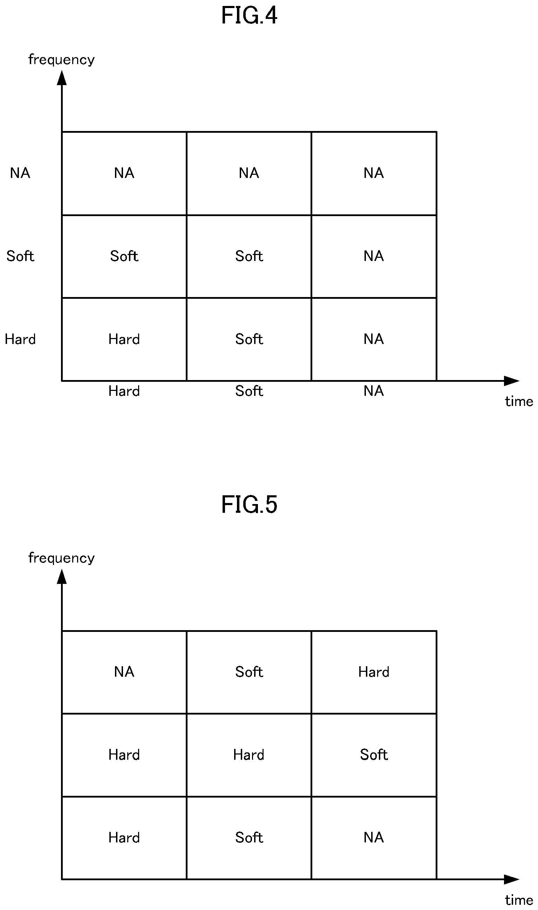

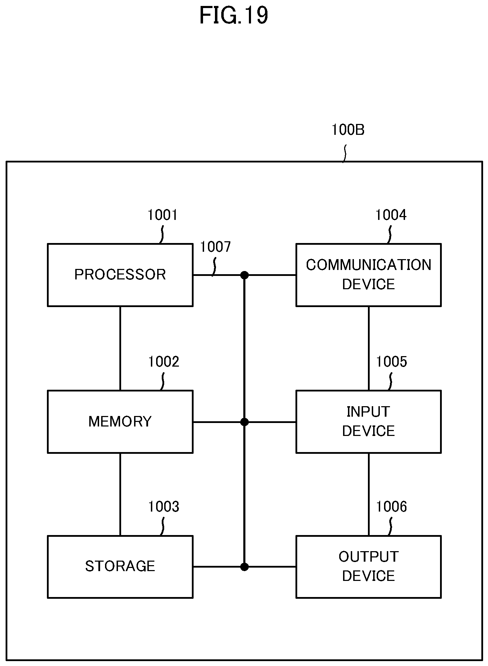

Note that only the main functional blocks related to the description of the embodiment are shown in Fig.5, and the radio communication node 100B has other functional blocks (For example, the power supply). Also, Fig.5 shows the functional block configuration of the radio communication node 100B, and refer to Fig.19 for the hardware configuration.

The radio signal transmission and reception unit 110 transmits and receives radio signals in accordance with NR. By controlling radio (RF) signals transmitted from multiple antenna elements, the radio signal transmission and reception unit 110 can support Massive MIMO for generating more directional beams, carrier aggregation (CA) for bundling multiple component carriers (CCs), and dual connectivity (DC) for simultaneously communicating between the UE and each of the two NG-RAN nodes.

The radio signal transmission and reception unit 110 can send and receive radio signals to and from the radio communication node 100A via cell C1. radio signal transmission and reception unit 110 can also send and receive radio signals to and from the radio communication node 100C or UE 200 via cell C2.

The amplifier unit 120 is composed of a PA (Power Amplifier)/LNA (Low Noise Amplifier), etc. The amplifier unit 120 amplifies the signal output from the modulation and demodulation unit 130 to a predetermined power level. The amplifier unit 120 also amplifies the RF signal output from the radio signal transmission and reception unit 110.

The modulation and demodulation unit 130 performs data modulation/demodulation, transmission power setting and resource block allocation for each specific communication destination (Radio communication node 100A, 100B or UE 200).

The control signal processing unit 140 performs processing on various control signals transmitted and received by the radio communication node 100B. Specifically, the control signal processing unit 140 receives various control signals transmitted from the radio communication node 100A (or radio communication node 100C, hereinafter the same) and the UE 200 via a control channel, for example, control signals of a radio resource control layer (RRC). The control signal processing unit 140 also transmits various control signals to the radio communication node 100A or the UE 200 via a control channel.

Furthermore, the control signal processing unit 140 can perform processing using a reference signal (RS) such as a Demodulation Reference Signal (DMRS) and a Phase Tracking Reference Signal (PTRS).

DMRS is a known reference signal (pilot signal) between individual base stations and terminals for estimating a fading channel used for data demodulation. PTRS is a reference signal for individual terminals for estimating phase noise, which is a problem in high frequency bands.

In addition to DMRS and PTRS, the reference signal may include Channel State Information-Reference Signal (CSI-RS), Sounding Reference Signal (SRS), and Positioning Reference Signal (PRS) for location information.

Channels include control and data channels. Control channels include PDCCH (Physical Downlink Control Channel), PUCCH (Physical Uplink Control Channel), PRACH (Physical Random Access Channel), and PBCH (Physical Broadcast Channel).

Data channels include PDSCH (Physical Downlink Shared Channel), and PUSCH (Physical Uplink Shared Channel). Signals may include channels and reference signals.

In the embodiment, the control signal processing unit 140 receives downlink control information (DCI) that specifies the frequency resources available in the frequency direction as radio resources (DU resources) to be allocated to the radio link (Link_child) with the lower node (For example, radio communication node 100C). The information element that specifies the frequency resources available in the frequency direction can take an information element that indicates that it is available as a DU resource in Soft (S) (IA (Indication Available) and an information element that indicates that it is not available as a DU resource in Soft (S) (INA (Indication Not-Available). The control signal processing unit 140 may receive a DCI from an IAB donor (parent node). For example, the control signal processing unit 140 may receive the DCI from the radio communication node 100A.

Such a DCI may be a newly defined DCI or a DCI that is an extension of an existing DCI. An existing DCI may be a DCI that designates a time resource available in the time direction as a radio resource (DU resource). A DCI that designates a time resource available in the time direction may be a DCI that has a format of DCI format 2_5 (see 3GPP TS 38.212 Chapter 7.3).

The DU resource may be specified in units in the time direction (For example, a symbol or a slot) and in units in the frequency direction (For example, subcarriers).

The encoding/decoding unit 150 performs data division/concatenation and channel coding/decoding for each predetermined communication destination (radio communication node 100A or UE 200).

Specifically, the encoding/decoding unit 150 divides the data output from the data transmission and reception unit 160 into predetermined sizes and performs channel coding on the divided data. The encoding/decoding unit 150 also decodes the data output from the modulation and demodulation unit 130 and concatenates the decoded data.

The data transmission and reception unit 160 transmits and receives protocol data units (PDU) and service data units (SDU). Specifically, the data transmission and reception unit 160 performs assembly/disassembly of PDUs/SDUs in multiple layers (Media access control layer (MAC), radio link control layer (RLC), and packet data convergence protocol layer (PDCP), etc.).

The control unit 170 controls each functional block constituting the radio communication node 100B. In particular, in this embodiment, the control unit 170 performs control regarding simultaneous transmission and reception between the IAB-MT and the IAB-DU.

In the embodiment, the control unit 170 dynamically controls communication using the radio link (Link_child) based on the DCI. For example, the control unit 170 performs communication using a radio link (Link_child) with frequency resources designated as available by the DCI.

### (3) Semi-static DU resources

Go below and describe the configuration for the type of DU resources (Hard, Soft, NA) that are semi-static (semi-static).

As shown in Fig.4, the type of DU resources in the time direction and the type of DU resources in the frequency direction may be configured separately. In such a case, the type of DU resources identified by the Hard-Hard combination may be Hard. The type of DU resources identified by the Hard-Soft or Soft-Soft combination may be Soft. The type of DU resources identified by the Hard-NA, Soft-NA or NA-NA combination may be NA. The information element that configures the type of DU resources in the time direction may be called DU resource configuration (in Release 16). The information element that configures the type of DU resource in the frequency direction may be called DU resource configuration for Frequency resource.

As shown in Fig.5, the type of DU resource in the time and frequency directions may be configured simultaneously. In such a case, the type of DU resource can be configured arbitrarily. The information element that the type of DU resource in the time and frequency directions simultaneously configurations may be referred to as a DU resource configuration for T(Time)-F(Frequency) resource.

### (4) Dynamic DU resources

In the context described above, the specification of dynamic DU resources is mainly described in the embodiment. The specification of dynamic DU resources is performed by an information element (For example, IA/INA) indicating that it is available as a DU resource.

### (4.1) First example

The first example illustrates a case in which a new DCI is defined as a DCI containing an information element (IA/INA) that indicates that it can be used as a DU resource in the frequency direction. The format of the newly defined DCI may be the newly defined DCI format.

The new DCI may have a format similar to the DCI (For example, DCI format 2_5) that contains information elements (For example, IA/INA) indicating that it is available as a DU resource in the time direction.

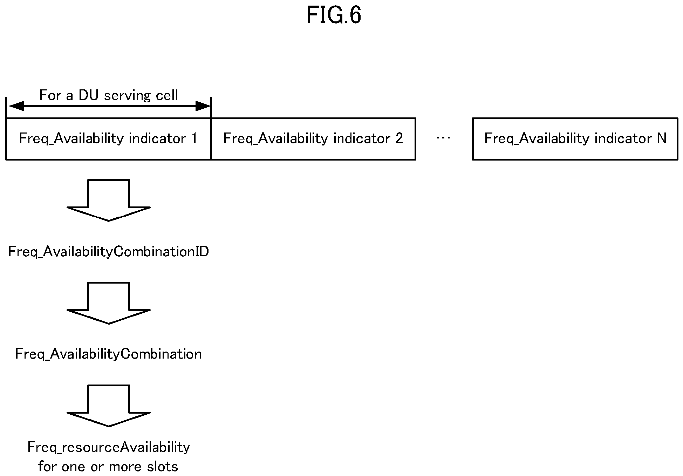

For example, as shown in Fig.6, it may contain Freq_resourceAvailability indicators (Freq_resourceAvailability indicators 1-N) with a number (For example, N) corresponding to DU serving cells. Each Freq_resourceAvailability indicator may contain a set of availability combinations specified by the Freq Availability Combination. Each set of availability combinations may contain a Freq_resourceAvailability indicating the availability of a symbol (below, soft symbol) in Soft (S) for a DU serving cell, and a Freq Availability CombinationID indicating a mapping of availability to the index value of the Freq_resourceAvailability indicator. Freq_resourceAvailability may be an example of an information element (IA/INA) indicating whether it is available as a DU resource in the frequency direction. For example, Freq_resourceAvailability may contain the following values:
0...No indication for availability of soft symbol
1...DL soft symbol available, no indication for UL and Flexible soft symbol
2...UL soft symbol available, no indication for DL and Flexible soft symbol
3...DL and UL soft symbol available, no indication for Flexible soft symbol
4...Flexible soft symbol available, no indication for DL and UL soft symbol
5...DL and Flexible soft symbol available, no indication for UL
6...UL and Flexible soft symbol available, no indication for DL
7...DL, UL and Flexible soft symbol available

The Flexible soft symbol can be used for both DL and UL.

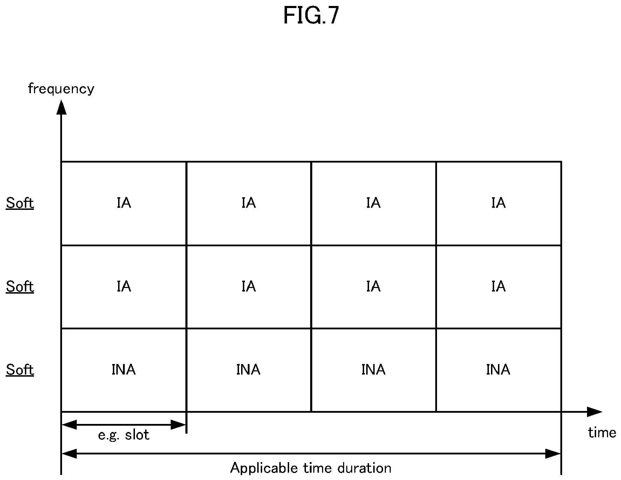

As shown in Fig.7, Freq_resourceAvailability may specify a common information element (IA/INA) for all (In Fig.7, the Applicable time duration) of the units (For example, slot) in the time direction as an information element (IA/INA) indicating whether it can be used as a DU resource in the frequency direction. The unit in the time direction may be slot. Applicable time duration is the period to which the DCI is applied, and Fig.7 illustrates a case where the Applicable time duration is 4 slots.

In such a case, the Freq_resourceAvailability indicator may contain an information element (IA/INA) corresponding to the number of units (For example, subcarriers) in the frequency direction.

As described above, the IAB node (For example, radio communication node 100B) receives a DCI that is commonly applied to all of the units of time resources available in the time direction as a DU resource in the applicable time duration for which the DCI is applied, as a DCI that specifies the frequency resource available in the frequency direction as a DU resource. A DCI that specifies the frequency resource available in the frequency direction as a DU resource is a DCI defined separately from a DCI (For example, DCI format 2_5) that specifies the time resource available in the time direction as a DU resource.

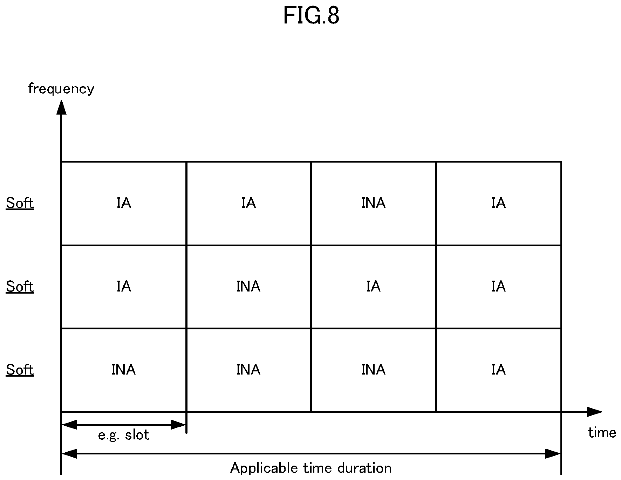

As shown in Fig.8, Freq_resourceAvailability may be an information element that specifies an individual information element (IA/INA) for one unit (For example, slot) in the time direction as an information element (IA/INA) that indicates whether it is available as a DU resource in the frequency direction. The unit in the time direction may be slot. Applicable time duration is the period to which the DCI is applied, and Fig.8 illustrates a case where the Applicable time duration is 4 slots.

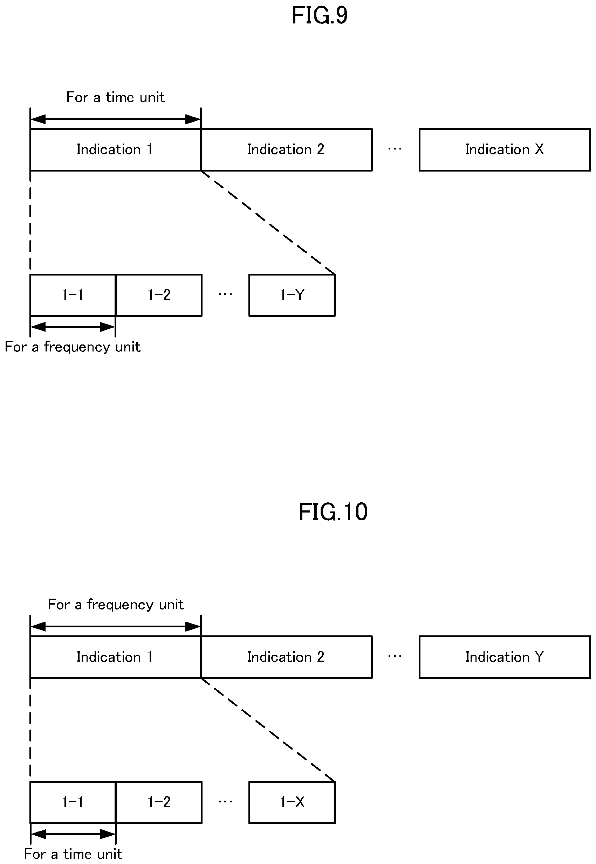

In such a case, Freq_resourceAvailability may include Indication for each unit in the time direction. For example, as shown in Fig.9, Freq_resourceAvailability may include Indication for the number of units (X) in the time direction. Each Indication may include an information element (IA/INA) for the number of units (Y) in the frequency direction. For example, if "1" means IA and "0" means INA, for example in the case shown in Fig.8, Freq_resourceAvailability may include four Indications such as "011," "001," "010" and "111."

Alternatively, Freq_resourceAvailability may include Indication for each unit in the frequency direction. For example, as shown in Fig.10, Freq_resourceAvailability may include Indication for the number of units (Y) in the frequency direction. Each Indication may include an information element (IA/INA) for the number of units (X) in the time direction. For example, if "1" means IA and "0" means INA, and using the case shown in Fig.8 as an example, Freq_resourceAvailability may include three Indications such as "0001," "1011," and "1101."

As described above, the IAB node (For example, radio communication node 100B) receives a DCI that is applied individually for each unit of time resource available in the time direction as a DU resource during an applicable time duration as a DCI that specifies the frequency resource available in the frequency direction as a DU resource. A DCI that specifies the frequency resource available in the frequency direction as a DU resource is a DCI defined separately from a DCI (For example, DCI format 2_5) that specifies the time resource available in the time direction as a DU resource.

For clarity of explanation, Figs.9 and 10 illustrate two cases where the possible values of an Indicator are 0 (= INA) and 1 (= IA). However, the possible values of an Indicator may be 1 or more of any of the eight types of 0 to 7 described above.

### (4.2) Second example

The second example illustrates a case in which a DCI (For example, DCI format 2_5) containing an information element (IA/INA) indicating that it can be used as a DU resource in the frequency direction is extended, and a DCI containing an information element (IA/INA) indicating that it can be used as a DU resource in the time direction is extended.

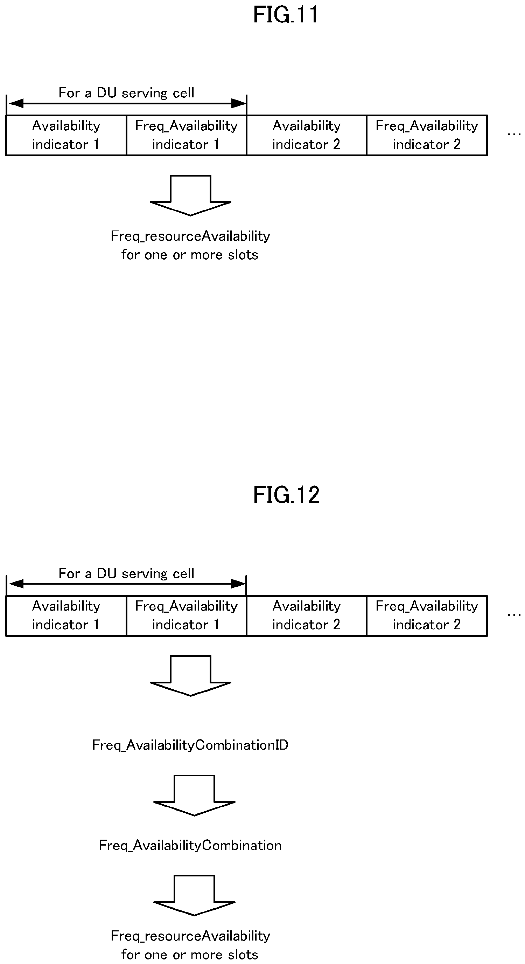

For example, as shown in Fig.11, the Freq_resourceAvailability indicator may include Freq_resourceAvailability, which directly specifies the frequency resource of Soft (S). The content of Freq_resourceAvailability may be similar to the case shown in Figs.6 to 10.

The location of the Freq_resourceAvailability indicator may be predetermined. For example, the location of the Freq_resourceAvailability indicator may be after the Available indicator for the same DU serving cell. The location of the Freq_resourceAvailability indicator may be before the Available indicator for the same DU serving cell. The position of the Freq_resourceAvailability indicator may be configured by the RRC message independently of the Available indicator.

Here, the Freq_resourceAvailability indicator only needs to exist for at least one DU serving cell. That is, a mixture of DU serving cells for which the Freq_resourceAvailability indicator exists and DU serving cells for which the Freq_resourceAvailability indicator does not exist may exist.

Alternatively, as shown in Fig.12, the Freq_resourceAvailability indicator may contain a set of availability combinations specified by the Freq Availability Combination, similar to the example shown in Fig.6. Each set of availability combinations may contain a Freq_resourceAvailability indicating the availability of a soft symbol for a DU serving cell, and a Freq Availability CombinationID indicating the mapping of Freq_resourceAvailability to the index value of the Freq_resourceAvailability indicator. The contents of Freq_resourceAvailability may be similar to the cases shown in Figs.6 through 10.

The mapping between Freq Availability Combination ID and Freq Availability Combination may be configured by RRC messages. Similar to the case shown in Fig.11, the location of the Freq_resourceAvailability indicator may be predetermined or configured by an RRC message.

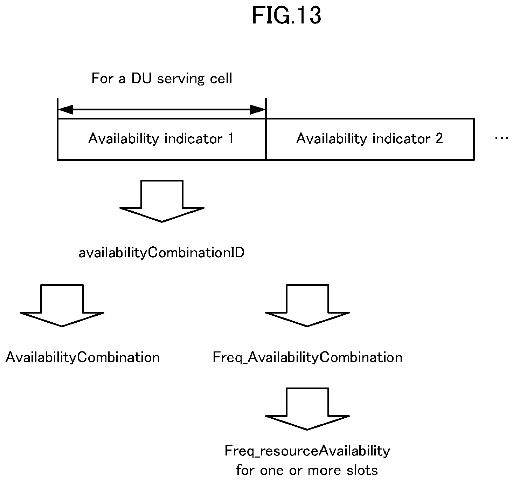

Alternatively, as shown in Fig.13, the Available indicator included in an existing DCI (For example, DCI format 2_5) may include an availabilityCombinationID that indicates a mapping of the AvailabilityCombination and Freq_resourceAvailabilityCombination. Freq_resourceAvailabilityCombination indicates a mapping of Freq_resourceAvailability to the index value of the Availability indicator. The content of Freq_resourceAvailability may be similar to the case shown in Figs.6 to 10.

The mapping between the AvailabilityCombination and the Freq Availability Combination may be configured by RRC messages. The mapping between the Freq Availability Combination and the Freq Availability Combination may be configured by RRC messages.

A DCI that is an extension of an existing DCI (For example, DCI format 2_5) may be newly defined as a DCI with a new DCI format.

As described above, the IAB node (For example, radio communication node 100B) receives a DCI that is applied to one or more units in the time direction as a DU resource in an Applicable time duration as a DCI that specifies the frequency resource available in the frequency direction as a DU resource. A DCI that specifies the frequency resource available in the frequency direction as a DU resource is a DCI extended from a DCI (For example, DCI format 2_5) that specifies the time resource available in the time direction as a DU resource.

Figs.9 and 10 illustrate a case in which an Indicator can have two values, 0 (= INA) and 1 (= IA), for clarification. However, an Indicator can have one of the eight values described above, 0 to 7.

### (4.3) Third example

The third example illustrates a case in which a new DCI is defined as a DCI containing an information element (IA/INA) that indicates that it can be used as a DU resource in the frequency direction. The format of the newly defined DCI may be the newly defined DCI format.

The new DCI may be a DCI that simultaneously designates time and frequency resources as DU resources. The new DCI may have a format similar to a DCI (For example, DCI format 2_5) that includes an information element (IA/INA) indicating that it can be used as a DU resource in the time direction.

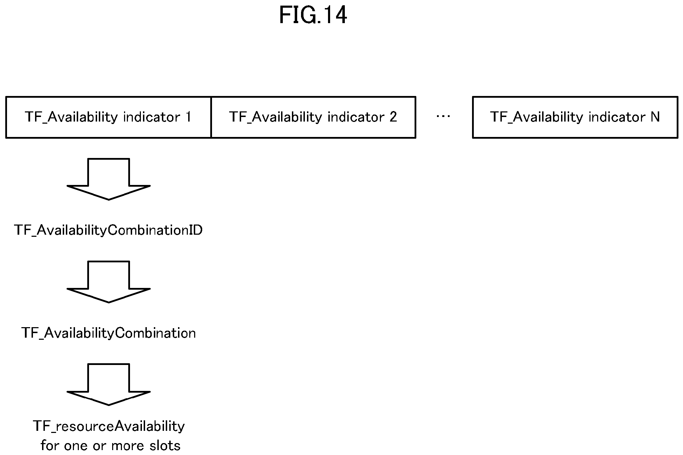

For example, as shown in Fig.14, it may include a number (For example, N) of TF_resourceAvailability indicators (TF_resourceAvailability indicators 1 to N) corresponding to DU serving cells. Each TF_resourceAvailability indicator may include a set of availability combinations specified by TF_resourceAvailability Combination. Each set of availability combinations may include a TF_resourceAvailability indicating the availability of a symbol (below, soft symbol) in Soft (S) for a DU serving cell, and a TF Availability CombinationID indicating a mapping of availability to the index value of the TF_resourceAvailability indicator. TF_resourceAvailability may be an example of an information element (IA/INA) indicating whether it is available as a DU resource in both the time and frequency directions.

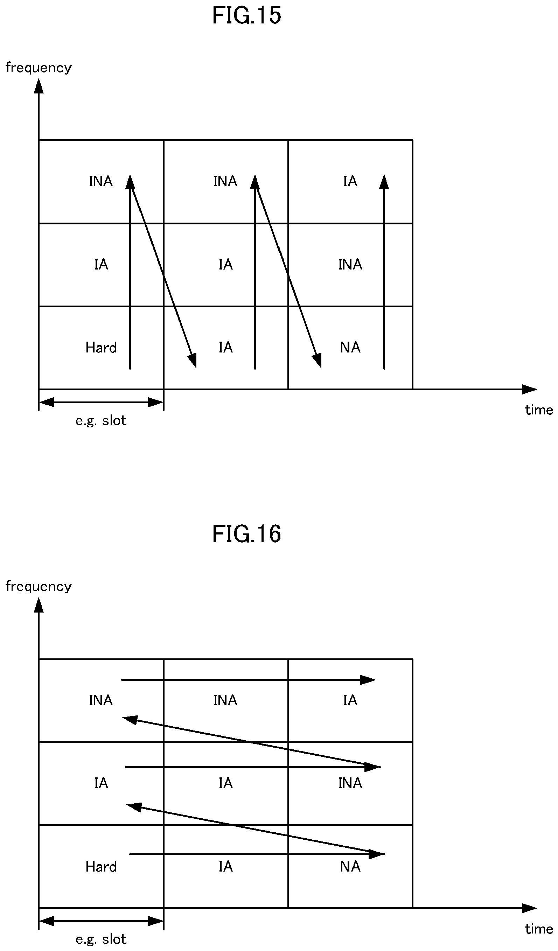

Here, TF_resourceAvailability indicating whether the time and frequency resources are available may be expressed in the form of a bitmap. As shown in Fig.15, the bitmaps may have a sort order that is ordered in the frequency direction and then shifted in the time direction. In the case shown in Fig.15, the bitmaps may be represented by "10," "110" and "01." In the bitmaps, TF_resourceAvailability of Hard and NA may be omitted. Alternatively, as shown in Fig.16, the bitmaps may have an ordering sequence that shifts in the frequency direction after being ordered in the time direction. In the case shown in Fig.16, the bitmaps may be represented by "1," "110" and "001." In the bitmaps, TF_resourceAvailability of Hard and NA may be omitted.

In such cases, the IAB node (For example, radio communication node 100B) may assume the receipt of either a new DCI or an existing DCI (For example, DCI format 2_5) containing TF_resourceAvailability. For example, the IAB node may assume the receipt of a new DCI if it supports a new DCI. The IAB node may assume the receipt of an existing DCI if it does not support a new DCI.

Alternatively, the IAB node (For example, radio communication node 100B) may assume the receipt of both a new DCI and an existing DCI (For example, DCI format 2_5), including TF_resourceAvailability. The IAB node may decide whether to apply a new DCI or an existing DCI, based on whether or not it supports FDM. For example, the IAB node may assume that it will apply a new DCI if it supports FDM. The IAB node may assume that it will apply an existing DCI if it does not support FDM.

Whether an IAB node supports FDM may be configured or specified by the IAB donor or parent node. Whether an IAB node supports FDM may be configured or specified by at least one of the RRC message, MAC CE message and DCI. Whether an IAB node supports FDM may be reported by the IAB node by at least one of the RRC message, MAC CE message and DCI. Whether an IAB node supports FDM may be configured or specified by the IAB donor or parent node based on a report from the IAB node to the IAB donor or parent node. Whether an IAB node supports FDM may be explicitly configured or specified, or implicitly configured or specified.

At least one of configurations, specifying and reporting whether an IAB node supports FDM may be performed for each DU serving cell.

As described above, an IAB node (For example, radio communication node 100B) receives a DCI that simultaneously specifies a time resource and a frequency resource as DU resources in an Applicable time duration, as a DCI that specifies the frequency resource available in the frequency direction as a DU resource. A DCI that specifies the frequency resource available in the frequency direction as a DU resource is a DCI defined separately from a DCI (For example, DCI format 2_5) that specifies the time resource available in the time direction as a DU resource.

### (4.4) Fourth example

The third example illustrates a case in which a DCI (For example, DCI format 2_5) containing an information element (IA/INA) indicating that it can be used as a DU resource in the frequency direction is extended, and a DCI containing an information element (IA/INA) indicating that it can be used as a DU resource in the time direction is extended. In such a case, the TF_resourceAvailability for a newly defined soft time-frequency symbol may be configured by an RRC message. Here are some possible options for setting up the mapping:
In the first option, either one of the mappings between the existing availabilityCombinationID and the new TF_resourceAvailability or the mapping between the existing availabilityCombinationID and the existing resourceAvailability may be configured.

In such a case, the IAB node (For example, radio communication node 100B) may assume the configurations of a mapping between the existing availabilityCombinationID and the new TF_resourceAvailability if it supports FDM. The IAB node may assume the configurations of a mapping between the existing availabilityCombinationID and the existing resourceAvailability if it does not support FDM.

In the second option, both a mapping between the existing availabilityCombinationID and TF_resourceAvailability and a mapping between the existing availabilityCombinationID and the existing resourceAvailability may be configured.

In such a case, the IAB node (For example, radio communication node 100B) may assume the application of a mapping between the existing availabilityCombinationID and the new TF_resourceAvailability if it supports FDM. IAB nodes may assume the application of a mapping between an existing availabilityCombinationID and an existing resourceAvailability if they do not support FDM.

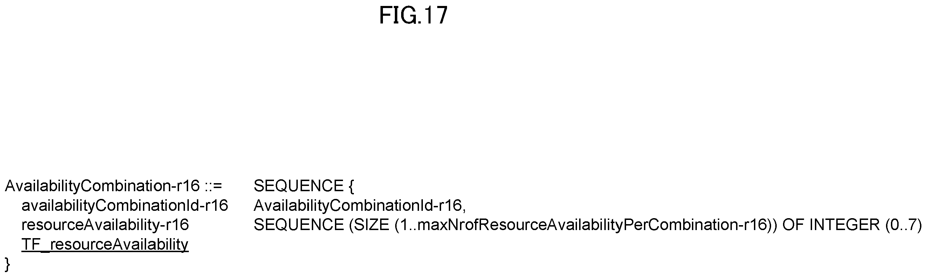

For example, as shown in Fig.17, an RRC message may include an AvailabilityCombination-r16. The AvailabilityCombination-r16 may include existing availabilityCombinationid-r16 and resourceAvailability-r16. In addition, the AvailabilityCombination-r16 may include a new TF_resourceAvailability.

In the third option, both a mapping between a new TF_availabilityCombination ID and TF_resourceAvailability and a mapping between an existing availabilityCombination ID and an existing resourceAvailability may be configured.

In such cases, IAB nodes (For example, radio communication node 100B) may assume the application of a mapping between a new TF_availabilityCombination ID and a new TF_resourceAvailability if they support FDM. IAB nodes may assume the application of a mapping between an existing availabilityCombination ID and an existing resourceAvailability if they do not support FDM.

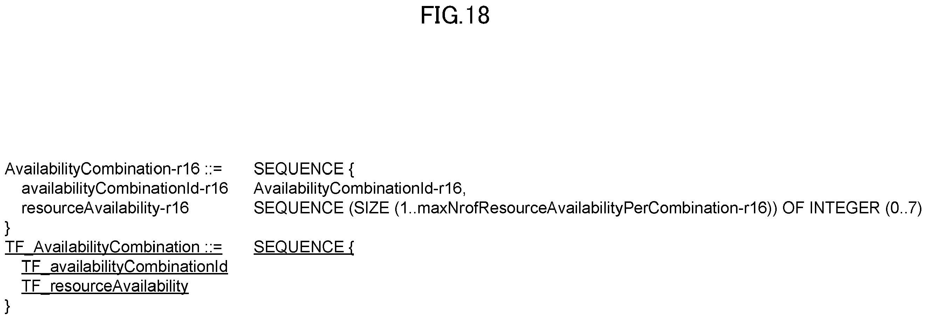

For example, as shown in Fig.18, the RRC message may include the AvailabilityCombination-r16. The AvailabilityCombination-r16 may include the existing availabilityCombinationid-r16 and resourceAvailability-r16. In addition, the RRC message may include TF_AvailabilityCombination as a new information element. The TF_AvailabilityCombination may include a new TF_availabilityCombinationid and a new TF_resourceAvailability-r16.

Whether an IAB node supports FDM may be configured or specified by the IAB donor or parent node. Whether an IAB node supports FDM may be configured or specified by at least one of the RRC message, MAC CE message and DCI. Whether an IAB node supports FDM may be reported by the IAB node by at least one of the RRC message, MAC CE message and DCI. Whether an IAB node supports FDM may be configured or specified by the IAB donor or parent node based on a report from the IAB node to the IAB donor or parent node.

At least one of configuration, specifying, and reporting whether or not an IAB node supports FDM may be performed for each DU serving cell.

As described above, an IAB node (For example, radio communication node 100B) receives a DCI that simultaneously specifies a time resource and a frequency resource as DU resources in an Applicable time duration as a DCI that specifies the frequency resource available in the frequency direction as a DU resource. A DCI that specifies the frequency resource available in the frequency direction as a DU resource is a DCI that extends a DCI (For example, DCI format 2_5) that specifies the time resource available in the time direction as a DU resource.

### (5) Action and Effect

According to the above embodiment, the following action and effect can be obtained. Specifically, the IAB node (For example, radio communication node 100B) receives downlink control information (DCI) that specifies the frequency resources available in the frequency direction as radio resources (DU resources) to be allocated to the radio link (Link_child) with the lower node (For example, radio communication node 100C). The IAB node dynamically controls communication using the radio link (Link_child) based on the DCI. With such a configuration, frequency resources in the frequency direction that can be used as DU resources can be used dynamically.

### (6) Other Embodiments

Although the above description of the embodiment is not limited to the description of the embodiment, it is obvious to those skilled in the art that various modifications and improvements are possible.

Although not specifically mentioned in the above described embodiment, capability information indicating whether or not an IAB node (For example, radio communication node 100B) supports FDM multiplexing Backhaul link (DU) and Access link (MT) may be defined. The IAB node may report capability information to an IAB donor or parent node. Actions on the DCI indicating that it is available as a DU resource in the frequency direction may be applied if capability information is reported indicating that it supports FDM. Actions on the DCI indicating that it is available as a DU resource in the frequency direction may not be applied if capability information indicating that it supports FDM is not reported.

While not specifically touched upon in the above described embodiment, actions on the DCI indicating that it can be used as a DU resource in the frequency direction may be applied when configured by higher layer signaling. Actions on the DCI indicating that it can be used as a DU resource in the frequency direction may not be applied when it is not configured by higher layer signaling.

In the above described embodiment, the names of the parent node, the IAB node and the child node are used, but the names may be different as long as the configuration of the radio communication node is adopted in which the radio backhaul between the radio communication nodes such as gNB and the radio access with the terminal are integrated. For example, it may be simply referred to as the first or second node, or it may be referred to as the upper node, lower node or relay node, intermediate node, etc.

Furthermore, the radio communication node may be simply referred to as a communication device or communication node, or may be read as a radio base station.

The block diagram (Fig.3) used to describe the above embodiment shows a block of functional units. Those functional blocks (structural components) can be realized by a desired combination of at least one of hardware and software. Means for realizing each functional block is not particularly limited. That is, each functional block may be realized using one device that is physically or logically coupled, or two or more devices that are physically or logically separated may be directly or indirectly connected (For example, using wired, wireless, etc.) and realized using these multiple devices. The functional block may be realized by combining the software with the one device or the multiple devices.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission function is called a transmission unit (transmitting unit) or a transmitter. In either case, as described above, the implementation method is not particularly limited.

In addition, the radio communication nodes 100A to 100C (the device) described above may function as a computer for processing the radio communication method of this disclosure. Fig.19 shows an example of the hardware configuration of the device. As shown in Fig.19, the device may be configured as a computer device including a processor 1001, a memory 1002, a storage 1003, a communication device 1004, an input device 1005, an output device 1006 and a bus 1007, etc.

Furthermore, in the following explanation, the term "device" can be replaced with a circuit, device, unit, and the like. The hardware configuration of the device may be configured to include one or more of each device shown in the figure, or it may be configured without some devices.

Each functional block of the device (see Fig.3) is realized by any hardware element of the computer device, or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 controls the entire computer by, for example, operating the operating system. The processor 1001 may consist of a central processing unit (CPU) including interfaces with peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. In addition, the various processes described above may be performed by a single processor 1001 or simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, a cache, a main memory (main memory), etc. The memory 1002 can store programs (program code), software modules, etc., that can execute a method according to one embodiment of this disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. The bus 1007 may be configured using a single bus or different buses for each device.

Furthermore, the device may be configured including hardware such as a microprocessor, a digital signal processor (DSP), an application specific integrated circuit (ASIC), a programmable logic device (PLD), a field programmable gate array (FPGA), etc., with which some or all of the functional blocks may be implemented. For example, the processor 1001 may be implemented by using at least one of these hardware.

In addition, notification of information is not limited to the mode/embodiment described in this disclosure and may be made using other methods. For example, notification of information may be carried out by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, e.g., an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative order to present elements of various steps and is not limited to the specific order presented.

The specific operation that is performed by the base station in the present disclosure may be performed by its upper node in some cases. In a network consisting of one or more network nodes with base stations, it is clear that various operations performed for communication with terminals can be performed by the base station and at least one of the other network nodes (For example, but not limited to MME or S-GW) other than the base station. In the above, an example in which there is one network node other than the base station is explained; however, a combination of a plurality of other network nodes (for example, MME and S-GW) may be used.

Information, signals (information, etc.) can be output from an upper layer (or lower layer) to a lower layer (or upper layer). It may be input and output via a plurality of network nodes.

The input/output information can be stored in a specific location (for example, a memory) or can be managed in a management table. Information that is input or output can be overwritten, updated, or appended. The information can be deleted after outputting. The inputted information can be transmitted to another device.

The determination may be made by a value represented by a single bit (0 or 1), by a truth value (Boolean: true or false), or by comparing numbers (For example, a comparison with a given value).

Each aspect/embodiment described in this disclosure may be used alone, in combination, or switched as execution proceeds. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, if the software is transmitted from a website, server, or other remote source using at least one of wired technology (Coaxial cable, fiber optic cable, twisted pair, Digital subscriber Line (DSL), etc.) and wireless technology (Infrared, microwave, etc.), at least one of these wired and wireless technologies is included within the definition of a transmission medium.

Information, signals, or the like mentioned above may be represented by using any of a variety of different technologies. For example, data, instructions, commands, information, signals, bits, symbols, chips, etc. that may be referred to throughout the above description may be represented by voltage, current, electromagnetic wave, magnetic field or magnetic particle, light field or photon, or any combination thereof.

It should be noted that the terms described in this disclosure and those terms necessary for the understanding of this disclosure may be replaced with terms having the same or similar meanings. For example, at least one of the channels and symbols may be a signal (signaling). Also, the signal may be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station" "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

A base station can house one or more (For example, three) cells, also called sectors. In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a base station performing communication services in this coverage and to part or all of the coverage area of at least one of the base station subsystems.

In the present disclosure, the terms "mobile station (Mobile Station: MS)," "user terminal," "user equipment (User Equipment: UE)," "terminal" and the like can be used interchangeably.

A mobile station may be referred to by those skilled in the art as a subscriber station, mobile unit, subscriber unit, radio unit, remote unit, mobile device, radio communication device, remote device, mobile subscriber station, access terminal, mobile terminal, radio terminal, remote terminal, handset, user agent, mobile client, client, or some other appropriate term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, airplanes, etc.), an unattended mobile (For example, drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in this disclosure may also be read as a mobile station (user terminal, hereinafter the same). For example, each mode/embodiment of this disclosure may be applied to a configuration in which communication between a base station and a mobile station is replaced with communication between multiple mobile stations (For example, it may be called Device-to-Device (D2D), Vehicle-to-Everything (V2X), etc.). In this case, the mobile station may have the function of the base station. In addition, words such as "up" and "down" may be replaced with words corresponding to communication between terminals (For example, "side"). For example, terms an uplink channel, a downlink channel, or the like may be read as a side channel.

Similarly, mobile stations in this disclosure may be replaced with base stations. In this case, the base station may have the function of the mobile station. A radio frame may consist of one or more frames in the time domain. Each one or more frames in the time domain may be referred to as a subframe. A subframe may further consist of one or more slots in the time domain. A subframe may have a fixed length of time (For example, 1 ms) independent of numerology.

Numerology may be a communication parameter applied to at least one of the transmission and reception of a signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

Slots may consist of one or more symbols (Orthologous Frequency Division Multiplexing (OFDM)) symbols, Single Carrier Frequency Division Multiple Access (SC-FDMA) symbols, etc., in the time domain. A slot may be a unit of time based on the numerology.

A slot may include a plurality of minislots. Each minislot may consist of one or more symbols in the time domain. A minislot may also be called a subslot. A minislot may be composed of fewer symbols than slots. A PDSCH (or PUSCH) transmitted in units of time larger than a minislot may be referred to as a PDSCH (or PUSCH) mapping type A. A PDSCH (or PUSCH) transmitted using a minislot may be referred to as a PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be referred to as a transmission time interval (TTI), multiple consecutive subframes may be referred to as TTI, or one slot or one minislot may be referred to as TTI. That is, at least one of the subframes and TTI may be a subframe (1 ms) in existing LTE, a period shorter than 1 ms (For example, 1 -13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

If one slot or one minislot is called a TTI, one or more TTIs (That is, one or more slots or one or more minislots) may be the minimum unit of time for scheduling. In addition, the number of slots (number of minislots) constituting the minimum unit of time for scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI, which is usually shorter than TTI, may be called shortened TTI, short TTI, partial or fractional TTI, shortened subframe, short subframe, minislot, subslot, slot, etc.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a unit of resource allocation in the time and frequency domains and may include one or more consecutive subcarriers in the frequency domain. The number of subcarriers included in RB may be, for example, twelve, and the same regardless of the topology. The number of subcarriers included in the RB may be determined based on the neurology.

The time domain of the RB may also include one or more symbols and may be one slot, one minislot, one subframe, or one TTI long. One TTI, one subframe, etc., may each consist of one or more resource blocks.

One or more RBs may be referred to as Physical RB (PRB), SubCarrier Group (SCG), Resource Element Group (REG), PRB pair, RB pair, etc.

A resource block may also be composed of one or more Resource Elements (RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs with respect to the common reference point of the carrier. PRB may be defined in BWP and numbered within that BWP.

BWP may include UL BWP (UL BWP) and DL BWP (DL BWP). For a UE, one or more BWPs may be configured within a carrier.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, configurations such as the number of subframes included in a radio frame, the number of subframes or slots per radio frame, the number of minislots included in a slot, the number of symbols and RBs included in a slot or minislot, the number of subcarriers included in an RB, and the number of symbols, symbol length, and Cyclic Prefix (CP) length in a TTI may be varied variably.

The terms "connected," "coupled" or any variation thereof mean any connection or combination, directly or indirectly, between two or more elements and may include the presence of one or more intermediate elements between two elements that are "connected" or "coupled" to each other. The connection or connection between elements may be physical, logical or a combination thereof. For example, "connection" may be read as "access." As used in this disclosure, two elements may be considered to be "connected" or "coupled" to each other using at least one of one or more wire, cable and printed electrical connections and, as a few non-limiting and non-comprehensive examples, electromagnetic energy with wavelengths in the radio frequency domain, the microwave domain and the optical (both visible and invisible) domain.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to elements using designations such as "first" or "second" as used in this disclosure does not generally limit the amount or order of those elements. Such designations can be used in the present disclosure as a convenient way to distinguish between two or more elements. Thus, references to the first and second elements do not imply that only two elements can be adopted there or that the first element must in some way precede the second element.

In the present disclosure, the used terms "include," "including," and variants thereof are intended to be inclusive in a manner similar to the term "comprising." Furthermore, the term "or (or)" as used in this disclosure is not intended to be an exclusive OR.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "determination" may include regarding some action as "judgment" and "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 Radio communication system
100A, 100B, 100C Radio communication node
110 Radio signal transmission and reception unit
120 Amplifier unit
130 Modulation and demodulation unit
140 Control signal processing unit
150 Encoding/decoding unit
160 Data transmission and reception unit
170 Control unit
200 UE
C1, C2, C3 Cells
1001 Processor
1002 Memory
1003 Storage
1004 Communication device
1005 Input device
1006 Output device
1007 Bus

## Claims

1. A radio communication node comprising:
a reception unit that receives downlink control information that specifies available frequency resources in a frequency direction as a radio resource to be allocated to a radio link with a lower node; and
a control unit that dynamically controls communication using the radio link based on the downlink control information.

2. The radio communication node according to claim 1, wherein
the reception unit receives, as the downlink control information, downlink information that is commonly applied to all units of time resources available in a time direction as the radio resource during an application period to which the downlink control information is applied, or downlink information that is respectively applied to each unit of the time resource.

3. The radio communication node according to claim 1, wherein
the reception unit receives, as the downlink control information, downlink control information that simultaneously specifies a time resource available in a time direction as the radio resource and the frequency resource.

4. The radio communication node according to claim 2 or 3, wherein
the downlink control information is downlink control information defined separately from the downlink control information that specifies the time resource.

5. The radio communication node according to claim 2 or 3, wherein
the downlink control information is downlink control information that extends the downlink control information that specifies the time resource.

6. A radio communication method comprising:
a step of receiving downlink control information that specifies available frequency resources in a frequency direction as a radio resource to be allocated to a radio link with a lower node; and
a step of dynamically controlling communication using the radio link based on the downlink control information.
